**Europäisches Patentamt**

**European Patent Office**

**Office européen des brevets**

(19)

(11) Numéro de publication: **0 269 465 B1**

(12) **FASCICULE DE BREVET EUROPEEN**

(45) Date de publication du fascicule du brevet:
23.05.90

(51) Int. Cl.⁵: **F27B 3/08, C21C 5/52, H05B 7/11**

(21) Numéro de dépôt: 87401760.1

(22) Date de dépôt: 28.07.87

(54) **Procédé de fusion en continu de ferraille dans un four électrique à courant continu ét four électrique pour la mise en oeuvre du procédé.**

(30) Priorité: 01.08.86 FR 8611217

(43) Date de publication de la demande:
01.06.88 Bulletin 88/22

(45) Mention de la délivrance du brevet:
23.05.90 Bulletin 90/21

(84) Etats contractants désignés:
AT CH DE ES FR GB IT LI SE

(56) Documents cités:
EP-A- 0 150 483
DE-A- 2 932 938
FR-A- 2 298 249
US-A- 1 902 638

IRON AND STEEL ENGINEER,
vol. 62, no. 5, mai 1985, pages 50-54, Pittsburgh,
Pennsylvania, US; S.-E. STENKVIST: "Single electrode
d-c arc furnace"

(73) Titulaire: CLECIM, 107 boulevard de la Mission
Marchand, F-92402 Courbevoie Cédex(FR)

(72) Inventeur: Janiak, Robert André, Lieu dit "La Loge"
Saint-Romains Les Atheux,
F-42660 Saint-Genest-Malifaux(FR)
Inventeur: Davené, Jean Georges, 3 rue de la Sabotte,
F-78160 Marly le Roi(FR)

(74) Mandataire: Phélip, Bruno et al, c/o Cabinet Harlé &
Phélip 21, rue de La Rochefoucauld, F-75009 Paris(FR)

## Description

La présente invention concerne un procédé de fusion en continu de ferraille dans un four électrique à courant continu et un four électrique pour la mise en oeuvre du procédé, comprenant une cuve fermée par une voûte et dans laquelle se forme un bain de métal liquide par fusion de ferraille alimentée en continu par une ouverture ménagée dans la voûte, la fusion étant obtenue au moyen d'au moins un arc électrique jaillissant entre au moins une électrode pénétrant dans la cuve à travers la voûte et au moins une électrode ménagée dans le fond de la cuve qui forme une sole garnie de réfractaire, lesdites électrodes de voûte et de sole étant reliées par des conducteurs, respectivement d'amenée et de retour du courant aux deux pôles d'une source de courant continu.

L'alimentation continue des ferrailles dans les fours électriques alimentés en courant alternatif est connue ainsi que les fours alimentés en courant continu.

Cependant, dans les fours alimentés en courant alternatif, la dissymétrie des arcs, corrigible partiellement par déséquilibre électrique, entraîne un déséquilibre entre les trois phases d'alimentation haute tension peu compatible avec les exigences du fournisseur d'énergie électrique. Cet inconvénient n'existe pas avec les fours alimentés en courant continu.

Par ailleurs, dans les fours à arcs, on place normalement les électrodes au centre de la voûte et on cherche à maintenir les arcs bien verticaux dans l'axe de la cuve de façon à éviter autant que possible la surchauffe localisée des parois due à des déviations des arcs. Mais il est difficile d'introduire la ferraille dans la zone la plus chaude c'est-à-dire, en pratique, au centre de fusion placé au milieu des électrodes.

On a certes proposé d'utiliser des électrodes creuses servant de tubes d'introduction, mais cette technique complique évidemment la fabrication des électrodes et ne peut, de toutes façons, être utilisée qu'avec une matière première se présentant sous forme divisée et non pas de la ferraille.

La présente invention a pour objet un procédé et un four à arc alimenté à partir d'une source de courant continu et alimenté en continu par de la ferraille, où, par une utilisation judicieuse du champ magnétique créé par les conducteurs électriques, il est possible de localiser le point le plus chaud constituant le centre de fusion des ferrailles au même endroit où la ferraille peut être introduite facilement en continu.

Ce problème est résolu grâce au fait que l'ouverture d'alimentation en ferraille d'un côté et la ou les électrodes de voûte de l'autre côté étant décalées respectivement de part et d'autre de l'axe de la cuve, on décale la ou les électrodes de sole du côté de l'ouverture et on fait passer le ou les conducteurs de retour branchés sur la ou les électrodes de sole sous le fond de la cuve et au plus près de celui-ci, en les dirigeant vers la zone opposée du four où sont placées les électrodes de voûte, de façon à produire des champs magnétiques susceptibles de dévier le ou les arcs vers une zone écartée des électrodes de voûte et placée sensiblement au-dessous de l'ouverture d'alimentation en ferraille.

L'invention est définie de façon plus précise dans les revendications.

L'invention concerne également les caractéristiques ci-après, considérées isolément ou selon toutes leurs combinaisons techniquement possibles:
- le four comprend une pluralité d'électrodes de voûte et de sole, disposées respectivement en deux séries dirigées chacune sensiblement suivant un plan, lesdits plans des électrodes sont décalés de part et d'autre de l'axe et les conducteurs branchés respectivement sur lesdites électrodes sont disposés en deux groupes, les conducteurs de chaque groupe étant parallèles entre eux et dirigés transversalement au plan des électrodes correspondantes, les conducteurs de retour étant dirigés de façon à passer sensiblement à la verticale des électrodes de voûte,
- le deuxième groupe de conducteurs (9) est disposé sensiblement le long du fond de la cuve mtallique,
- les électrodes de sole sont disposées en avant des électrodes de voûte en considérant l'ouverture d'alimentation des ferrailles,
- tant le deuxième groupe de conducteurs que les électrodes de sole sont respectivement parallèles au premier groupe de conducteurs et aux électrodes de voûte,
- tant le deuxième groupe de conducteurs que les électrodes de sole sont respectivement décalés latéralement en regard du premier groupe de conducteurs et des électrodes de voûte,
- le fond de la cuve métallique est d'épaisseur minimale,
- la cuve métallique présente une perméabilité magnétique relative faible d'environ 40 à environ 500,
- la cuve métallique est en matériau métallique amagnétique,
- le four comprend du côté de l'alimentation en ferrailles un renforcement en matériau réfractaire,
- le renforcement en matériau réfractaire est constitué d'un matériau choisi parmi les oxydes métalliques, la fonte et l'acier,
- la cuve est montée basculante autour d'un axe horizontal sensiblement perpendiculaire au plan vertical de symétrie sur lequel est centré au moins un groupe d'électrodes de voûte, un orifice de coulée et un seuil de décrassage étant placés de part et d'autre dudit axe,
- le four comprend, en outre, une admission d'éléments d'alliage et une admission d'insufflation d'oxygène à l'opposé de l'admission de ferrailles,
- le four comprend, en outre, une injection d'oxygène à la surface du métal du côté de l'amenée et du retour du courant électrique.

Mais l'invention couvre aussi d'autres caractéristiques avantageuses qui ressortiront de la description détaillée ci-après, faite à titre d'exemple en regard des dessins annexés, sur lesquels :

Fig.1 est une coupe schématique d'un four selon l'invention ;

Figs.2 et 3 sont des vues de dessus schématiques d'un premier mode de réalisation de l'invention;

Fig.4 est une vue de dessus schématique d'un deuxième mode de réalisation de l'invention.

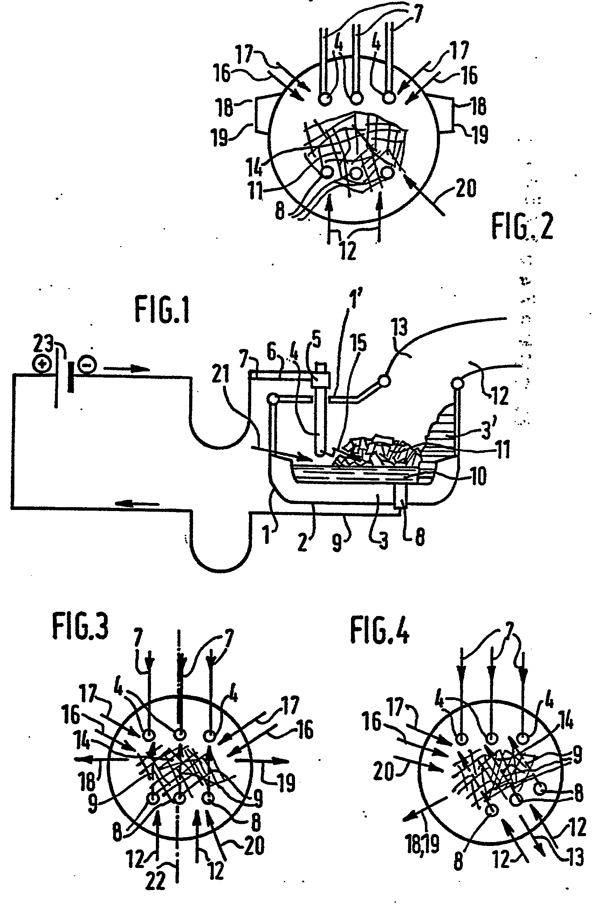

Sur les figures du dessin annexé, les parties analogues sont désignées par les mêmes chiffres de référence. Le four qui est alimenté à partir d'une source de courant continu 23 comprend une cuve métallique 1 fermée une voute 1' dans laquelle se trouve un bain liquide 10 surmonté de ferrailles 11 qui sont alimentées à partir d'une ouverture de voûte supérieure 12 située à l'opposé d'une pluralité d'électrodes de voûte 4, qui sont reliées à un premier groupe de conducteurs 7 d'amenée de courant provenant de la source de courant continu 23. En partie basse, la sole réfractaire 3 est pourvue d'une pluralité d'électrodes 8 reliées à un deuxième groupe de conducteurs 9 qui retournent vers la source de courant continu. La circulation du courant est effectuée dans le sens indiqué par les flèches sur la figure 1. La fusion est obtenue au moyen de l'arc électrique 15 jaillissant entre les électrodes du voute 4 et les électrodes de sole 8. Les électrodes de voûte 4 sont à distance des ferrailles 11 pour ne pas être endommagées par lesdites ferrailles et sont portées par des pinces 5 alimentées par les conducteurs 7 qui vont vers la source de courant continu.Comme on l'a déjà indiqué,l'alimentation 12 des ferrailles et la sortie des fumées 13 se font sensiblement à l'opposé des électrodes de voûte 4.Pour protéger la cuve 1 dont le fond est désigné par 2 contre les ferrailles du côté de l'alimentation 12 en ferrailles 11, on prévoit, selon la présente invention, comme illustré sur la figure 1 un renforcement 3' en matériau réfractaire constitué par exemple d'oxydes métalliques, de fonte ou d'acier. On injecte de l'oxygène en 21 à la surface du métal du côté de l'amenée et du retour du courant électrique acheminé par le premier groupe de conducteurs 7 et le deuxième groupe de conducteurs 9. La référence 6 désigne des bras conducteurs reliés aux pinces 5. Pour obtenir la localisation de la zone de fusion 14, il est prévu, selon la présente invention,de disposer le deuxième groupe de conducteurs 9 des électrodes de sole 8 le plus près possible du fond 2 de la cuve métallique 1 et tourné en direction des électrodes de voûte 4 à l'opposé de la zone du four où sont insérées les électrodes de sole 8. Habituellement, le deuxième groupe de conducteurs 9 est disposé sensiblement horizontalement par rapport au fond 2 de la cuve métallique 1. Comme le montre la figure 3, le deuxième groupe de conducteurs 9 est un réseau de conducteurs sensiblement parallèles.

Etant donné que, lors de l'alimentation par l'ouverture de la voûte 12, la surchauffe du métal est maximale sur le côté de la ferraille 11 opposé à l'ouverture 12, on prévoit de ce côté de la cuve 1 des admissions d'éléments d'alliage 16 et une insufflation d'oxygène 17.

La cuve 1 est montée basculante autour d'un axe horizontal placé dans un plan vertical de symétrie sur lequel est centré au moins un groupe d'électrodes de voûte 4 ainsi que l'ouverture d'alimentation 12, un seuil de décrassage 18 et l'orifice de coulée 19 étant placés de part et d'autre de ce plan, de même que les admissions d'éléments d'alliage 16 et d'insufflation d'oxygène 17, comme on l'a représenté sur les figures 2 et 3. On prévoit également une amenée de chaux 20 entre l'ouverture d'alimentation de ferraille 12 et la zone de décrassage 18 ou la sortie de métal liquide 19. Les électrodes de sole 8 sont disposées en avant des électrodes de voûte 4 en considérant l'ouverture d'alimentation 12 des ferrailles 11.

Dans le mode de réalisation selon la figure 3, les électrodes de voûte 4 et de sole 8 sont placées dans des plans parallèles et les conducteurs 9 branchés sur les électrodes de sole 8 sont parallèles aux conducteurs 7 des électrodes de voûte 4.

Dans le mode de réalisation selon la figure 4, les électrodes de sole 8 sont décalées latéralement et alignées suivant un plan faisant un angle avec le plan des électrodes de voûte 4, et les conducteurs de retour 9 sont orientés parallèlement dans la direction des électrodes de voûte 4. Sur la figure 4,ce décalage latéral est indiqué sur la droite, mais bien entendu il est tout aussi possible de prévoir un tel décalage latéral sur la gauche, la disposition étant alors symétrique à celle illustrée sur la figure 4.Dans les deux cas, on introduit les ferrailles dans la zone comprise entre les deux plans des électrodes de voûte 4 et de sole 8, mais plus rapprochée des électrodes de sole 8.

Dans ce mode de réalisation tel que représenté sur la figure 4, on a déplacé vers la droite la zone de fusion 14. Il est naturellement possible de déplacer ladite zone de fusion 14 vers la gauche dans le cas d'une disposition symétrique avec les électrodes de sole 8 décalées latéralement vers la gauche. Une zone de fusion décalée 14 peut faciliter l'alimentation en continu 12 des ferrailles 11 qui est aussi décalée ainsi que l'évacuation des fumées 13 comme représenté sur la figure 4. Dans tous les modes de réalisation de la présente invention,le deuxième groupe de conducteurs 9 est placé, comme on l'a déjà indiqué, le plus près possible du fond 2 de la cuve métallique 1.

On contribue à la localisation de la zone de fusion 14 (figures 2 et 3) en disposant les électrodes de sole 8, par exemple au nombre de trois ou plus, décalées en avant des électrodes de voûte 4, parallèles entre elles en principe, ces électrodes de sole 8 pouvant être dans un même plan et orthogonales ou non aux conducteurs 9.

Par cette disposition des électrodes de sole 8, on obtient des lignes de courant proches de l'horizontale dans le bain 10, ce qui est très favorable pour obtenir un champ magnétique supplémentaire qui aide à la déviation des arcs électriques 15.

Selon une technique bien connue de l'homme de l'art, les électrodes de voûte 4 sont réalisées normalement en graphite.

Les électrodes de voûte 4 sont parallèles entre elles et pourraient aussi ne pas être alignées dans un même plan mais, par exemple, disposées en triangle ainsi que les électrodes de sole 8.

La longueur des électrodes de voûte 4 (figure 1) assujetties aux pinces 5 est réduite au maximum en utilisant les bras conducteurs 6. A titre d'exemple, les longueurs des électrodes de voûte 4 peuvent être inférieures à 2 mètres pour un four de l'ordre de 40 MW.

Pour améliorer les conditions de localisation de la zone de fusion 14,on dispose les conducteurs d'alimentation 7 (figures 1, 2, 3 et 4) dans une direction opposée à la zone de fusion 14 envisagée le plus près du four et, en principe, parallèles entre eux.

Etant donné que la cuve ne doit pas faire écran magnétique, le fond 2 de la cuve métallique 1 est d'épaisseur minimale. Il présente une perméabilité magnétique relative faible d'environ 40 à environ 500. Il s'agit, de préférence, d'un matériau métallique amagnétique.

Dans le cas d'une disposition décalée latéralement entre les électrodes de voûte et les électrodes de sole, comme montré sur la figure 4, l'arrivée des ferrailles 12, l'évacuation des fumées 13 sont disposées approximativement dans le prolongement des électrodes de voûte 4 de la zone de fusion 14 et des électrodes de sole 9. Les admissions d'éléments d'alliage 16, l'insufflation d'oxygène 17, le seuil de décrassage 18, l'orifice de coulée 19 et l'amenée de chaux 20 sont placés, dans ce cas, du côté opposé à celui vers lequel la zone de fusion 14 a été décalée. Pour favoriser la zone de fusion 14, il est souhaitable qu'une injection d'oxygène 21 soit effectuée à la surface du métal par une lance placée du côté de l'amenée et du retour du courant, c'est-à-dire du côté de la voûte où arrivent les conducteurs 7 et d'où partent les conducteurs 9.

La présente invention propose donc un four d'une conception relativement simple qui permet une utilisation judicieuse du champ magnétique créé par les conducteurs électriques pour obtenir une localisation précise de la zone de fusion à l'endroit le plus approprié. On obtient ainsi un rendement bien meilleur que celui possible jusqu'à maintenant .

L'invention n'est pas limitée aux modes de réalisation représentés et décrits en détail, on pourrait, en particulier, selon les besoins, jouer sur le nombre et la disposition des conducteurs.

**Revendications**

1.Procédé de fusion en continu de ferraille dans un four électrique à courant continu comprenant une cuve (1) fermée par une voûte (1') et dans laquelle se forme un bain de métal liquide (10) par fusion de ferraille alimentée en continu par une ouverture (12) ménagée dans la voûte (1'), la fusion étant obtenue au moyen d'au moins un arc électrique (15) jaillissant entre au moins une électrode (4) pénétrant dans la cuve (1) à travers la voûte (1') et au moins une électrode (8) ménagée dans le fond (2) de la cuve (1) qui forme une sole (3) garnie de réfractaires, lesdites électrodes de voûte (4)et de sole (8) étant reliées par des conducteurs respectivement (7) d'amenée et (9) de retour du courant aux deux pôles d'une source de courant continu (23) , caractérisé par le fait que, l'ouverture d'alimentation en ferraille (12) d'un côté et la ou les électrodes de voûte (4) de l'autre côté étant décalées respectivement de part et d'autre de l'axe de la cuve (1), on décale la ou les électrodes de sole (8) du côté de l'ouverture (12) et on fait passer le ou les conducteurs de retour (9) branchés sur la ou les électrodes de sole (8) sous le fond (2) de la cuve (1) et au plus près de celui-ci en les dirigeant vers la zone opposée du four où sont placées les électrodes de voûte (4), de façon à produire des champs magnétiques susceptibles de dévier le ou les arcs vers une zone écartée des électrodes de voûte (4) et placée sensiblement au-dessous de l'ouverture (12) d'alimentation en ferraille .

2.Procédé de fusion en continu de ferraille selon la revendication 1, caractérisé par le fait que l'on utilise une pluralité d'électrodes de voûte (4) et de sole (8) disposées, respectivement, en deux séries dirigées chacune sensiblement suivant un plan, que l'on décale ledit plan des électrodes (4) et (8) de part et d'autre de l'axe de la cuve (1) et que l'on alimente lesdites électrodes (4) et (8) respectivement par un premier groupe de conducteurs (7) et par un second groupe de conducteurs (9), les conducteurs de chaque groupe étant parallèles entre eux et sensiblement perpendiculaires au plan des électrodes correspondantes, les conducteurs (9) du second groupe étant orientés de façon que chacun passe sensiblement à la verticale d'une électrode de voûte (4).

3.Procédé de fusion en continu de ferraille selon la revendication 2,caractérisé par le fait que l'on introduit la ferraille dans une zone comprise entre les deux plans des électrodes de voûte (4) et de sole (8) et plus rapprochée desdites électrodes de sole (8).

4. Four à arc de fusion en continu de ferraille alimenté en courant continu,comprenant une cuve (1) fermée par une voûte (1') et dans laquelle se forme un bain de métal liquide (10) par fusion de ferraille alimentée en continu par une ouverture (12) ménagée dans la voûte (1'), la fusion étant obtenue au moyen d'au moins un arc électrique (15) jaillissant entre au moins une électrode (4) pénétrant dans la cuve (1) à travers la voûte (1') et au moins une électrode (8) ménagée dans le fond (2) de la cuve (1) qui forme une sole (3) garnie de réfractaires, lesdites électrodes de voûte (4) et de sole (8) étant reliées par des conducteurs , respectivement (7) d'amenée et (9) de retour du courant aux deux pôles d'une source de courant continu (23), caractérisé par le fait que la ou les électrodes de voûte (4) sont décalées d'un côté de l'axe de la cuve (1), la ou les électrodes de sole (8) et l'ouverture (12) d'alimentation en ferraille étant décalées du côté opposé, et que le ou les conducteurs de retour (9) branchés aux électrodes de sole (8) passent sous le fond (2) de la cuve (1) au plus près de celle-ci et sont dirigés vers la zone opposée de la cuve de façon à passer sensiblement à la verticale de la ou les électrodes de voûte (4) , la circulation du courant dans lesdits conducteurs de retour (9) produisant des champs magnéti ques susceptibles de dévier le ou les arcs vers une zone de la cuve (1) écartée des électrodes de voûte (4) et placée sensiblement au-dessous de l'ouverture (12) d'alimentation en ferraille.

5.Four à arc de fusion en continu de ferraille alimenté en courant continu,selon la revendication 4,caractérisé par le fait qu'il comprend une pluralité d'électrodes de voûte (4) et de sole (8), disposées respectivement en deux séries dirigées chacune sensiblement suivant un plan, que lesdits plans des

8 EP 0 269 465 B1 8

électrodes (4) et (8) sont décalés de part et d'autre de l'axe et que les conducteurs (7) et (9) branchés respectivement sur lesdites électrodes (4) et (8) , sont disposés en deux groupes, les conducteurs de chaque groupe étant parallèles entre eux et dirigés transversalement au plan des électrodes correspondantes, les conducteurs de retour (9) étant dirigés de façon à passer sensiblement à la verticale des électrodes de voûte (4) .

6.Four selon l'une des revendications 4 ou 5, caractérisé en ce que le deuxième groupe de conducteurs (9) est disposé sensiblement le long du fond (2) de la cuve métallique (1).

7.Four selon l'une quelconque des revendications 4 à 6, caractérisé en ce que les électrodes de sole (8) sont disposées en avant des électrodes de voûte (4) en considérant l'ouverture d'alimentation (12) des ferrailles (11).

8.Four selon la revendication 5, caractérisé en ce que tant le deuxième groupe de conducteurs (9) que les électrodes de sole (8) sont respectivement parallèles au premier groupe de conducteurs (7) et aux électrodes de voûte (4).

9.Four selon la revendication 5, caractérisé en ce que tant le deuxième groupe de conducteurs (9) que les électrodes de sole (8) sont respectivement décalés latéralement en regard du premier groupe de conducteurs (7) et des électrodes de voûte (4).

10.Four selon l'une quelconque des revendications 1 à 9, caractérisé en ce que le fond (2) de la cuve métallique (1) est d'épaisseur minimale.

11.Four selon l'une quelconque des revendications 1 à 10, caractérisé en ce que la cuve métallique (1) présente une perméabilité magnétique relative faible d'environ 40 à environ 500.

12.Four selon l'une quelconque des revendications 1 à 11, caractérisé en ce que la cuve métallique (1) est en matériau métallique amagnétique.

13. Four selon l'une quelconque des revendications 4 à 12, caractérisé en ce qu'il comprend du côté de l'alimentation (12) en ferrailles (11) un renforcement en matériau réfractaire (3').

14.Four selon la revendication 13,caractérisé en ce que le renforcement en matériau réfractaire (3') est constitué d'un matériau choisi parmi les oxydes métalliques, la fonte et l'acier.

15.Four selon l'une des revendications précédentes, caractérisé en ce que la cuve (1) est montée basculante autour d'un axe horizontal sensiblement perpendiculaire au plan vertical de symétrie sur lequel est centré au moins un groupe d'électrodes de voûte (4) , un orifice de coulée (19) et un seuil de décrassage (18) étant placés de part et d'autre dudit axe.

16.Four selon l'une quelconque des revendications 1 à 15, caractérisé en ce qu'il comprend, en outre, une admission (16) d'éléments d'alliage et une admission (17) d'insufflation d'oxygène à l'opposé de l'admission (12) de ferrailles (11).

17.Four selon l'une quelconque des revendications 1 à 16, caractérisé en ce qu'il comprend, en outre, une injection d'oxygène (21) à la surface du métal du côté de l'amenée et du retour du courant électrique.

**Patentansprüche**

1. Verfahren zum kontinuierlichen Einschmelzen von Schrott in einem Gleichstromlichtbogenofen mit einem durch ein Deckengewölbe (1') geschlossenes Gefäss (1), in welchem ein flüssiges Metallbad (10) durch Einschmelzen von Schrott entsteht, der kontinuierlich durch eine in dem Deckengewölbe (1') angeordneten Öffnung (12) zugeführt wird, wobei das Einschmelzen durch mindestens einen Lichtbogen (15) bewirkt wird, der zwischen mindestens einer durch das Deckengewölbe (1') hindurch in das Gefäss (1) eindringenden Elektrode (4) und mindestens einer Elektrode (8) entsteht, die an dem mit feuerfestem Material beschickten Herd (3) bildenden Boden (2) des Gefässes (1) angeordnet ist, wobei diese Decken- (4) und Herdelektroden (8) an den beiden Polen einer Gleichstromquelle (23) jeweils über Stromzu- (7) und Stromrückleitungen (9) verbunden sind, dadurch gekennzeichnet, dass, wobei die Schrottbeschickungsöffnung (12) auf einer Seite und die Deckenelektrode(n) (4) auf der anderen Seite beiderseits der Achse des Gefässes (1) jeweils versetzt sind, die Herdelektrode(n) (8) auf der Seite der Öffnung (12) versetzt wird (werden) und die an der oder die Herdelektrode(en) (8) angeschlossene(n) Stromrückleitung(en) (9) in nächster Nähe unter dem Boden (2) des Gefässes (1) mit einer Ausrichtung zu dem die Deckenelektroden aufnehmenden entgegengesetzten Ofenbereich hin so verlegt werden, dass Magnetfelder erzeugt werden, welche den oder die Lichtbogen in Richtung einer abseits der Deckenelektroden (4) gelegenen Zone ablenken kann (können), die sich im wesentlichen unter der Schrottbeschickungsöffnung (12) befindet.

2. Konti-Schmelzverfahren für Schrott nach Anspruch 1, dadurch gekennzeichnet, dass mehrere Decken- (4) und Herdelektroden (8) zum Einsatz kommen, die in zwei jeweils im wesentlichen gemäss einer Ebene ausgerichteten Reihen angeordnet sind, dass diese Ebene mit den Elektroden (4) und (8) beiderseits der Achse des Gefässes (1) versetzt wird, und dass diese Elektroden (4) und (8) mit einem ersten Satz Leitungen (7) und einem zweiten Satz Leitungen (9) gespeist werden, wobei die Leitungen von jedem Satz parallel zueinander und im wesentlichen senkrecht zu der Ebene der entsprechenden Elektroden verlaufen, und wobei die Leitungen (9) vom zweiten Satz so ausgerichtet sind, dass jede im wesentlichen lotrecht unter einer Deckenelektrode (4) liegt.

3. Konti-Schmelzverfahren für Schrott nach Anspruch 2, dadurch gekennzeichnet, dass die Schrottbeschickung in einer zwischen den beiden Ebenen der Decken- (4) und Herdelektroden (8) eingeschlossenen, etwas näher an den Herdelektroden (8) gelegenen Zone erfolgt.

4. Gleichstromlichtbogenofen zum kontinuierlichen Einschmelzen von Schrott, bestehend aus einem durch ein Deckengewölbe (1') geschlossenes Gefäss (1), in welchem ein flüssiges Metallbad (10) durch Einschmelzen von Schrott entsteht, der kontinuierlich durch eine in dem Deckengewölbe (1) angeordneten Öffnung (12) beschickt wird, wobei das Einschmelzen durch mindestens einen Lichtbogen (15) bewirkt wird, der zwischen mindestens einer durch das Deckengewölbe (1') hindurch in das Gefäss (1) eindringenden Elektrode (4) und mindestens einer Elektrode (8) entsteht, die an dem einen mit mit feuerfestem Material beschickten Herd (3) bildenden Boden (2) des Gefässes (1) angeordnet ist, wobei diese Decken- (4) und Herdelektroden (8) an den beiden Polen einer Gleichstromquelle (23) jeweils über Stromzu- (7) und Stromrückleitungen (9) verbunden sind, dadurch gekennzeichnet, dass die Deckenelektrode(n) auf einer Seite der Achse des Gefässes (1) versetzt ist (sind), wobei die Herdelektrode(n) (8) und die Schrottbeschickungsöffnung (12) auf der entgegengesetzten Seite versetzt sind, und dass die an die Herdelektroden (8) angeschlossenen Stromrückleitung(en) (9) in nächster Nähe unter dem Boden (2) des Gefässes (1) verlegt ist (sind) und zu dem entgegengesetzten Gefässbereich so ausgerichtet ist (sind), dass sie im wesentlichen lotrecht unter der (den) Deckenelektrode(n) (4) verlaufen, wobei der Strom in den Rückleitungen (9) Magnetfelder erzeugt, die den oder die Lichtbogen in Richtung einer von den Deckenelektroden abseits angeordneten, im wesentlichen unter der Schrottbeschickungsöffnung (12) gelegenen Zone des Gefässes (1) ablenken kann.

5. Gleichstromlichtbogenofen zum kontinuierlichen Einschmelzen von Schrott nach Anspruch 4, dadurch gekennzeichnet, dass er mehrere Decken- (4) und Herdelektroden (8) umfasst, die jeweils in zwei, im wesentlichen gemäss einer Ebene ausgerichteten Reihen angeordnet sind, dass die Ebenen der Elektroden (4) und (8) beiderseits der Achse versetzt sind, und dass die an die Elektroden (4) und (8) jeweils angeschlossenen Leitungen (7) und (9) in zwei Gruppen angeordnet sind, wobei die Leitungen jeder Gruppe parallel zueinander und quer zu der Ebene der entsprechenden Elektroden ausgerichtet sind, und wobei die Stromrückleitungen (9) so ausgerichtet sind, dass sie im wesentlichen lotrecht unter den Deckenelektroden (4) liegen.

6. Ofen nach einem der Ansprüche 4 oder 5, dadurch gekennzeichnet, dass der zweite Satz Leitungen (9) im wesentlichen entlang vom Boden (2) des Metallgefässes (1) angeordnet ist.

7. Ofen nach irgendeinem der Ansprüche 4 bis 6, dadurch gekennzeichnet, dass die Herdelektroden (8) in Bezug auf die Beschickungsöffnung (12) für den Schrott (11) vor den Deckenelektroden (4) angeordnet sind.

8. Ofen nach Anspruch 5, dadurch gekennzeichnet, dass sowohl der zweite Satz Leitungen (9) als auch die Herdelektroden (8) jeweils parallel zu dem ersten Gruppe Leitungen (7) und zu den Deckenelektroden (4) verlaufen.

9. Ofen nach Anspruch 5, dadurch gekennzeichnet, dass sowohl der zweite Gruppe Leitungen (9) als auch die Herdelektroden (8) jeweils seitenversetzt zu dem ersten Satz Leitungen (7) und zu den Deckenelektroden (4) angeordnet sind.

10. Ofen nach irgendeinem der Ansprüche 1 bis 9, dadurch gekennzeichnet, dass der Boden (2) von dem Metallgefäss (1) eine Mindestdicke aufweist.

11. Ofen nach irgendeinem der Ansprüche 1 bis 10, dadurch gekennzeichnet, dass das Metallgefäss (1) eine relativ geringe magnetische Permeabilität von ca. 40 bis ca. 500 aufweist.

12. Ofen nach irgendeinem der Ansprüche 1 bis 11, dadurch gekennzeichnet, dass das Metallgefäss (1) aus einem nichtmagnetischen Metallwerkstoff besteht.

13. Ofen nach irgendeinem der Ansprüche 1 bis 12, dadurch gekennzeichnet, dass er auf der Seite der Beschickung (12) für Schrott (11) eine Verstärkung aus feuerfestem Material (3') aufweist ist.

14. Ofen nach Anspruch 13, dadurch gekennzeichnet, dass die Verstärkung aus feuerfestem Material (3') aus einem unter Metalloxiden, Gusseisen und Stahl ausgewählter Werkstoff besteht.

15. Ofen nach einem der vorhergehenden Ansprüche, dadurch gekennzeichnet, dass das Gefäss (1) kippbar um eine waagerechte Achse montiert ist, die im wesentlichen senkrecht zur vertikalen Symmetrieebene ist, auf welcher mindestens eine Gruppe Deckenelektroden (4) zentriert ist, wobei ein Abstichloch (19) und ein Abschlacküberlauf (18) beiderseits dieser Achse angeordnet sind.

16. Ofen nach irgendeinem der Ansprüche 1 bis 15, dadurch gekennzeichnet, dass er weiterhin auf der zur Beschickung (12) für den Schrott (11) entgegengesetzten Seite einen Eintritt (16) für Legierungselemente sowie einen Eintritt (17) für Einblasen von Sauerstoff umfasst.

17. Ofen nach irgendeinem der Ansprüche 1 bis 16, dadurch gekennzeichnet, dass er weiterhin auf der Seite der Stromeinspeisung und Stromrückführung ein Sauerstoffeinblasmittel (21) zur Metalloberfläche hin aufweist.

**Claims**

1. Process for the continuous melting of scrap in an electric direct-current furnace comprising a shaft (1) which is closed by means of a vault (1') and in which a bath of liquid metal (10) forms as a result of the melting of scrap fed continuously via an orifice (12) made in the vault (1'), melting being obtained by means of at least one electric arc (15) flashing between at least one electrode (4) penetrating to the shaft (1) through the vault (1') and at least one electrode (8) arranged in the bottom (2) of the shaft (1) which forms a hearth (3) having a refractory lining, the said vault electrodes (4) and hearth electrodes (8) being connected respectively by means of current feed conductors (7) and current return conductors (9) to the two poles of a direct-current source (23), characterized in that, with the scrap feed orifice (12), on the one hand, and the vault electrode or vault electrodes (4), on the other hand, being offset respectively on either side of the axis of the shaft (1), the hearth electrode or hearth electrodes (8) are offset towards the orifice (12), and the return conductor or return conductors (9) connected to the hearth electrode or hearth electrodes (8) are led under the bottom (2) of the shaft (1) and as near as possible to this, being directed towards the opposite zone of the furnace where the vault electrodes (4) are located, so as to generate magnetic fields capable of deflecting the arc or arcs towards a zone set apart from the vault electrodes (4) and located substantially below the scrap feed orifice (12).

2. Process for the continuous melting of scrap according to Claim 1, characterized in that a plurality of vault electrodes (4) and hearth electrodes (8) arranged respectively in two series, each directed substantially in one plane, is used, in that the said planes of the electrodes (4) and (8) are offset on either side of the axis of the shaft (1), and in that the said electrodes (4) and (8) are fed respectively by means of a first group of conductors (7) and by means of a second group of conductors (9) the conductors of each group being parallel to one another and substantially perpendicular to the plane of the corresponding electrodes, the conductors (9) of the second group being oriented in such a way that each passes substantially vertically in line with a vault electrode (4).

3. Process for the continuous melting of scrap according to Claim 2, characterized in that the scrap is introduced into a zone located between the two planes of the vault electrodes (4) and hearth electrodes (8) and nearer to the said hearth electrodes (8).

4. Arc furnace for the continuous melting of scrap, supplied with direct current, comprising a shaft (1) which is closed by means of a vault (1') and in which a bath of liquid metal (10) forms as a result of the melting of scrap fed continuously via an orifice (12) made in the vault (1'), melting being obtained by means of at least one electric arc (15) flashing between at least one electrode (4) penetrating into the shaft (1) through the vault (1') and at least one electrode (8) arranged in the bottom (2) of the shaft (1) which forms a hearth (3) having a refractory lining, the said vault electrodes (4) and hearth electrodes (8) being connected respectively by means of current feed conductors (7) and current return conductors (9) to the two poles of a direct-current source (23) characterized in that the vault electrode or vault electrodes (4) are offset on one side of the axis of the shaft (1), the hearth electrode or hearth electrodes (8) and the scrap feed orifice (12) being offset on the opposite side, and in that the return conductor or return conductors (9) connected to the hearth electrodes (8) pass under the bottom (2) of the shaft (1) as near as possible to the latter and are directed towards the opposite zone of the shaft, so as to pass substantially vertically in line with the vault electrode or vault electrodes (4), the circulation of current in the said return conductors (9) generating magnetic fields capable of deflecting the arc or arcs towards a zone of the shaft (1) set apart from the vault electrodes (4) and located substantially below the scrap feed orifice (12).

5. Arc furnace for the continuous melting of scrap, supplied with direct current, according to Claim 4, characterized in that it has a plurality of vault electrodes (4) and hearth electrodes (8) arranged respectively in two series, each directed substantially in one plane, in that the said planes of the electrodes (4) and (8) are offset on either side of the axis, and in that the conductors (7) and (9) connected respectively to the said electrodes (4) and (8) are arranged in two groups, the conductors of each group being parallel to one another and being directed transversely relative to the plane of the corresponding electrodes, the return conductors (9) being directed so as to pass substantially vertically in line with the vault electrodes (4).

6. Furnace according to one of Claims 4 or 5, characterized in that the second group of conductors (9) is arranged substantially along the bottom (2) of the metal shaft (1).

7. Furnace according to any one of Claims 4 to 6, characterized in that the hearth electrodes (8) are arranged in front of the vault electrodes (4), as seen in the direction of the feed orifice (12) for the scrap (11).

8. Furnace according to Claim 5, characterized in that both the second group of conductors (9) and the hearth electrodes (8) are respectively parallel to the first group of conductors (7) and to the vault electrodes (4).

9. Furnace according to Claim 5, characterized in that both the second group of conductors (9) and the hearth electrodes (8) are respectively offset laterally relative to the first group of conductors (7) and the vault electrodes (4).

10. Furnace according to any one of Claims 1 to 9, characterized in that the bottom (2) of the metal shaft (1) is of minimum thickness.

11. Furnace according to any one of Claims 1 to 10, characterized in that the metal shaft (1) has a low relative magnetic permeability of approximately 40 to approximately 500.

12. Furnace according to any one of claims 1 to 11, characterized in that the metal shaft (1) is made of nonmagnetic metallic material.

13. Furnace according to any one of Claims 4 to 12, characterized in that it has, on the same side as the feed (12) for the scrap (11), a reinforcement made of refractory material (3').

14. Furnace according to Claim 13, characterized in that the reinforcement made of refractory material (3') consists of a material selected from the metallic oxides, cast iron and steel.

15. Furnace according to any one of the preceding claims, characterized in that the shaft (1) is mounted tiltably about a horizontal axis substantially perpendicular to the vertical plane of symmetry, on which at least one group of vault electrodes (4) is centred, a casting hole (19) and a cleaning sill (18) being located on either side of the said axis.

16. Furnace according to any one of Claims 1 to 15, characterized in that it also has an alloying-element intake (16) and an oxygen blowing intake (17) located opposite the feed (12) of the scrap (11).

17. Furnace according to any one of Claims 1 to 16, characterized in that it has furthermore an oxygen injection (21) on the surface of the metal on the same side as the feed and return of the electrical current.

EP 0 269 465 B1

1/1

FIG. 2

FIG.1

FIG.3

FIG.4